Europäisches Patentamt

European Patent Office

Office européen des brevets

(11) Veröffentlichungsnummer : **0 325 250 B1**

(12) **EUROPÄISCHE PATENTSCHRIFT**

(45) Veröffentlichungstag der Patentschrift :
**26.02.92 Patentblatt 92/09**

(21) Anmeldenummer : **89100885.6**

(22) Anmeldetag : **19.01.89**

(51) Int. Cl.⁵ : $B65D\ 88/74$, F25D 17/08,
B60P 3/20

(54) Doppelwandige Bodenplatte eines belüfteten Containers.

(30) Priorität : **21.01.88 DE 3801700**

(43) Veröffentlichungstag der Anmeldung :
**26.07.89 Patentblatt 89/30**

(45) Bekanntmachung des Hinweises auf die
Patenterteilung :
**26.02.92 Patentblatt 92/09**

(84) Benannte Vertragsstaaten :
**DE ES FR IT**

(56) Entgegenhaltungen :
**DE-A- 2 236 004**
**DE-B- 1 079 659**

(56) Entgegenhaltungen :
**FR-A- 2 163 344**
**US-A- 2 767 015**
**US-A- 4 091 743**
**US-A- 4 553 403**

(73) Patentinhaber : **GRAAFF Gesellschaft mit**
**beschränkter Haftung**
**Heinrich-Nagel-Strasse 1**
**W-3210 Elze (DE)**

(72) Erfinder : **Graaff, Wolfgang, Dipl.-Ing.**
**Hohnsen 36**
**W-3200 Hildesheim (DE)**

(74) Vertreter : **Walter, Helmut, Dipl.-Ing.**
**Aubinger Strasse 81**
**W-8000 München 60 (DE)**

Jouve, 18, rue Saint-Denis, 75001 PARIS

EP 0 325 250 B1

## Beschreibung

Die Erfindung bezieht sich auf eine doppelwandige Bodenplatte gemäß dem ersten Teil des Patentanspruches 1.

Der Boden von belüfteten Containern, z.B. Kühlcontainern, ist im allgemeinen mit Rippen versehen, die in Längsrichtung des Containers parallel zueinander verlaufend angeordnet sind, wenn der Container, wie allgemein üblich, die Form eines liegenden Quaders hat. Dies ist vor allem aus Gründen der Stabilität, aus Gründen der Luftzirkulation und aus Gründen der leichteren Handhabung des Ladegutes zweckmäßig. Andererseits wird durch den mit Rippen versehenen Boden dessen Begeh- und Befahrbarkeit beeinträchtigt, insbesondere wenn der Rippenabstand relativ groß ist, was mit Rücksicht auf die Luftzirkulation wünschenswert sein könnte. Außerdem besteht die Gefahr, daß die Rippen verbogen werden, wenn der Boden beim Be- und Entladen mit einem Gabelstapler befahren wird, da diese häufig mit Vollgummireifen versehen sind, weil diese für den langsamen Schwerlastverkehr von Gabelstaplern auf Werkshöfen besser als Luftreifen geeignet sind, andererseits bei Schwenkbewegungen der Räder auf einem Rippenboden die Rippen in Querrichtung stärker beanspruchen als es bei Luftreifen der Fall wäre.

Bisher werden die Bodenplatten von belüfteten Containern im allgemeinen als sogenannte Sandwichplatten gebaut, auf deren Oberseiten die Rippen aufgesetzt sind. Die Sandwichplatten bestehen aus einer ebenen oberen und einer ebensolchen unteren Deckplatte, wobei der Raum zwischen den Deckplatten mit Starrschaum ausgeschäumt ist. Während der Einbringung des Starrschaumes, im allgemeinen durch Aufschäumen der noch flüssigen Schaumkomponenten, geht dieser eine feste Verbindung mit den Deckplatten ein. Nach dem Erstarren hat die Schaumzwischenschicht infolge der vielen geschlossenen Hohlräume eine gute Isolierwirkung und infolge der vielen Hohlraumwände sowie der guten Bindung an die Deckplatten eine gute stabilisierende Wirkung. Die Rippen haben den Querschnitt eines "T", dessen Steg beiseitig an die obere Deckplatte der Sandwichplatte angeschweißt ist und dessen Flansch Teil der begeh- und befahrbaren Bodenoberseite ist. Die Rippen bilden Kanäle, durch die Luft zirkulieren kann, sie erhöhen die Steifigkeit der Platte und haben im unverformten Zustand auch ausreichende Festigkeit. Es zeigt sich jedoch immer wieder, daß die Quersteifigkeit der Rippen für den rauhen Be- und Entladebetrieb nicht ausreichend ist. Wendet ein Gabelstapler auf der Stelle, was wegen der engen Platzverhältnisse oft notwendig ist, so verbiegt er die Rippen sehr leicht in Querrichtung. Ist aber eine Rippe erst einmal in Querrichtung verbogen, so ist sie vertikal nicht mehr steif genug und sind erst einmal einige Rippen eines Containerbodens verbogen, so wird der gesamte Boden rasch unbrauchbar und reparaturbedürftig. Außerdem ist der Boden nur mit Schwierigkeiten zu reinigen. Trotz dieser erkannten Nachteile ist die beschriebene Bauweise seit langem und auch heute noch die am weitesten verbreitete Bauweise.

Sowohl die Festigkeit als auch die Reinigungsmöglichkeit würde verbessert, wenn die obere Deckplatte der Sandwichplatte Trapezform erhielte. Die Rinnen wären dabei nicht mehr wie bei der allgemein üblichen Form von hinterschnittenen sondern von vertikalen oder schrägen, aber glatten Wänden seitlich begrenzt, so daß die Reinigung problemlos auch maschinell möglich wäre. Wurzel- und Stirnfläche jeder Rippe könnte so bemessen werden, daß jede Rippe allen mechanischen Beanspruchungen gut gewachsen wäre. Die Platte hätte eine wesentlich längere Lebensdauer und wesentlich bessere Reinigungsfähigkeit als die übliche Platte. Der Nachteil bestünde jedoch insbesondere darin, daß bei ausreichender Festigkeit die zur Luftströmung zur Verfügung stehenden Querschnitte begrenzt wären und daß ein gleichmäßiges Ausschäumen erschwert wäre, wenn die Zahl der Einlaß- und Entlüftungsöffnungen für die Schaumkomponenten in Grenzen gehalten werden sollte, was aus verfahrenstechnischen Gründen und auch aus Gründen möglichst einfacher Schäumformen wünschenswert wäre. Außerdem bestünde die Gefahr, daß bei einem Verwinden der Bodenplatte an den Kanten an den beiden Rändern jeder Rinne Kerbwirkungen entstünden, die den Schaumstoffstützkörper beschädigen könnten, so daß eine solche Platte aus diesem Grund relativ rasch beschädigt würde und die Reparatur einer derart beschädigten Bodenplatte viel schwieriger wäre als die Reparatur einer Bodenplatte mit aufgesetzten Rippen. Eine derart ausgestaltete Platte hätte also einige Vorteile gegenüber einer heute üblichen Platte, ob sie aber insgesamt vorteilhafter wäre, müßte erst die Praxis erweisen.

Aufgabe der Erfindung ist es nun, eine Bodenplatte für einen belüfteten Container der letztgenannten, denkbaren Bauweise so auszubilden, bzw. abzuwandeln, daß sie die Vorteile dieser Bauweise hat, ohne daß die geschilderten Nachteile in Kauf genommen werden müssen. Es soll also mit anderen Worten eine gattungsgemäße Bodenplatte eines belüfteten Containers so ausgebildet werden, daß sie auch hohen mechanischen Beanspruchungen jeder Art gut gewachsen ist, daß sie wenig reparaturanfällig ist, daß sie gut zu reinigen ist und daß die Luftzirkulation im Behälter optimal möglich ist, zumindest aber die Ausbildung einer optimalen Luftzirkulation nicht durch Probleme behindert ist, die im Containerboden ihre Ursache haben.

Der Lösung der Aufgabe dienen die Merkmale des Patentanspruches 1; die Merkmale der Unteransprüche gestalten die Erfindung in zweckmäßiger Weise aus.

2

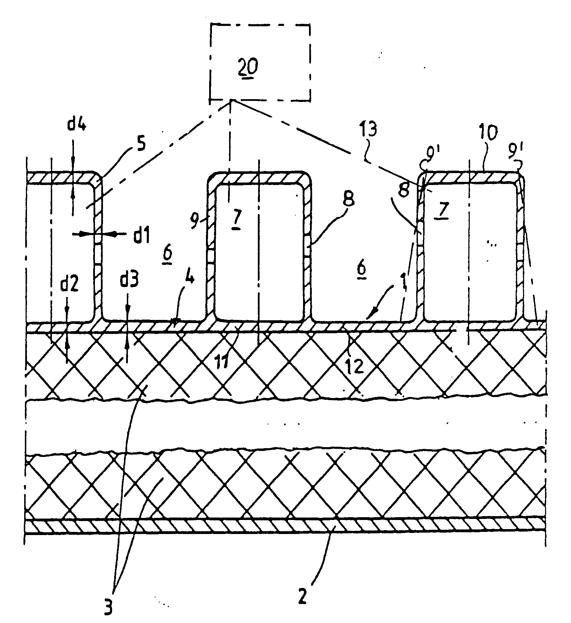

Die Erfindung wird nachfolgend anhand der Zeichnung näher erläutert. In der Zeichnung ist ein erfindungsgemäßer Containerboden als Querschnitt schematisch dargestellt. Da es sich um einen Querschnitt handelt, ist die Erstreckung der Bodenplatte in der Bildebene (Plattenquerrichtung) kleiner als deren Erstreckung senkrecht zur Bildebene (Plattenlängsrichtung), wobei der Einfachheit halber der Plattenquerschnitt nur als Ausschnitt dargestellt ist, d.h. beide seitlichen Plattenenden nicht dargestellt sind, da es hierauf zum Verständnis der Erfindung nicht ankommt. Auch die Plattendicke soll nicht festgelegt sein.

Die Bodenplatte besteht in an sich üblicher Weise u.a. aus einer oberen Deckplatte 1 sowie einer unteren Deckplatte 2 und dem Stützkörper 3. Zwischen den Deckplatten 1, 2 angeordnete Randprofile bilden bei der Fertigung der Bodenplatte zunächst zusammen mit den Deckplatten einen Hohlkörper, der in eine Schäumform eingestellt wird. Danach werden die zunächst noch flüssigen Schaumkomponenten in den Hohlraum der Bodenplatte eingebracht, sie schäumen auf und füllen dabei den gesamten Hohlraum lunkerfrei aus. Im Erstarren geht der Schaum eine feste Verbindung mit den Deckplatten und den Randprofilen ein und die Bodenplatte kann eingebaut werden bzw. bei der Containerfertigung verwendet werden.

Erfindungswesentlich ist nun die Ausgestaltung der oberen Deckplatte 1, wie sie aus der Zeichnung entnehmbar ist. Die obere Deckplatte ist ein Strangprofil aus Metall oder Kunststoff (entsprechend dem Werkstoff der unteren Deckplatte und den Randprofilen, vorzugsweise Metall). Sie besteht aus einem auf der (bei fertiger Bodenplatte) Innenseite glatten Plattenteil 4, aus dem die Rinnenprofile 5 so herauswachsen, daß die Oberseite des Plattenteiles 4 in die Rinnenprofile 5 übergeht und letztere in sich geschlossene Hohlprofile sind, deren Querschnitt vorzugsweise rechteckig ist und nochmals vorzugsweise ein auf einer Schmalseite stehendes Rechteck ist. Aus Gründen der Materialersparnis bei ausreichender Festigkeit ist die obere Deckplatte 1 ein Strangprofil unterschiedlicher Wanddicken. Die dünnsten Wandbereiche sind die vertikalen Seitenwände 9 der Rechteckprofile 5 und es folgen mit zunehmender Wanddicke die Bereiche 11 der Platte 4 zwischen den Seitenwänden 9 der Profile in den Bereichen der Profile 5, die die Kanäle 6 zwischen den Rechteckprofilen 5 nach unten begrenzenden Bereiche 12 der Platte 4 und die Oberseiten 10 der Profile 5. Um hierzu ein praxisbezogenes Beispiel zu nennen, werden folgende Zahlen genannt.

Dicke $d_1$ in den Bereichen der vertikalen Seitenwände 9 der Profile 5: 2,0 mm

Dicke $d_2$ in den Bereichen 11 der Platte 4 zwischen den Seitenwänden 9 der Profile 5: 2,2 mm,

Dicke $d_3$ in den Bereichen 12 der Platte 4 zwischen den Profilen 5: 2,5 mm und

Dicke $d_4$ in den Bereichen der Oberseiten 10 der Profile 5: 3,0 mm.

Die Seitenwände 9 der Profile 5 gehen in Übergangsbogen sowohl in die Platte 4 als auch in die jeweilige Profiloberseite 10 über.

Die Kanäle 6 zwischen den Profilen 5 können der Luftführung dienen. Der Querschnitt der Profile ergibt sich insoweit jedoch aus der geforderten Festigkeit.

Eine besonders zweckmäßige Möglichkeit ist mit der Erfindung jedoch damit gegeben, daß die Profile 5 als geschlossene Hohlprofile Luftführungskanäle 7 umschließen oder sogar die einzigen Luftführungskanäle sind, die dann zuverlässig dagegen geschützt sind, verschmutzt und dadurch insoweit unbrauchbar zu werden. In diesem Fall sind die Profilstirnseiten ober es ist eine von ihnen als Lufteinlaß ausgebildet und Luftauslässe 8 sind in den Profilwänden vorgesehen. Die Luftauslässe 8 können so auf die Profillänge verteilt und ihre Öffnungsquerschnitte können so bemessen werden, daß eine optimale Belüftung des Containers von seinem Boden aus erfolgt. Es kann durch Verteilung und Bemessung der Luftauslässe eine gleichmäßige Luftverteilung auf den gesamten Container bewirkt werden oder es können, z.B. bei unterschiedlichem Transportgut, unterschiedliche Belüftungsbereiche geschaffen werden. Um dies möglichst weitgehend gewährleisten zu können, sollte bei einem einem Fahrzeug zuzuordnenden Container die jeweils vordere Stirnseite jedes der Kanäle 7 als offener Lufteinlaß, die jeweils hintere Stirnseite jedes der Luftführungskanäle 7 geschlossen sein. Hierzu können vorderer und hinterer Stirnseite jedes der Luftführungskanäle umsteuerbare Klappen zugeordnet sein, um den Container in beiden Fahrtrichtungen des Fahrzeuges ohne Umsetzen in gleicher Weise belüften zu können.

Die Seitenwände 9 der Hohlprofile können, wie dargestellt, senkrecht und parallel zueinander verlaufen oder sie können so gegeneinander geneigt sein, daß sich die Kanäle 7 zur Platte 4 hin symmetrisch erweitern (unterbrochene Linienzüge 9′).

Am einfachsten erfolgt die Luftzirkulation in der Weise, daß die Rechteckprofile 5 an ihren beiden Stirnseiten offen und mit der Umgebung des Containers in Verbindung stehen, wenn damit zu rechnen ist, daß der Container nicht wesentlich bewegt wird oder nur geringe Anforderungen mit geringstem Aufwand befriedigt werden sollen. Ist damit zu rechnen, daß der Behälter, z.B. zum Seetransport, lange Zeit nur in einer Richtung bewegt wird, so ist die einfachste und ausreichend wirkungsvollste Lösung das Verschließen der Kanäle 7 am einen und ihr Offenlassen am anderen Ende. Ist jedoch mit einer häufig wechselnden Bewegungsrichtung, z.B. beim Bahn- oder LKW-Transport zu rechnen, so ist die vorerwähnte Lösung vorzusehen, bei der die einen Enden der Kanäle 7 offen, die anderen Enden verschlossen sind und diese Enden durch umsteuer bare Klap

3

pen gegeneinander zu vertauschen sind. In jedem Fall sorgt der Staudruck am vorderen Ende der Kanäle 7 am in Bewegungsrichtung vorderen Containerende dafür, daß genügend Frischluft in die Rechteckprofile 5 gelangt und von dort in den Innenraum des Containers. Reicht dies nicht aus, so können die Profilstirnseiten an ein Druckluftgebläse angeschlossen sein. Entsprechendes gilt für Luftführungskanäle 6 zwischen den Rechteckprofilen 5, wenn diese in das Belüftungssystem einbezogen werden und nicht nur über die Öffnungen 8 mit Frischluft versorgt werden sollen. Eine zwangsweise Luftführung in den Luftführungskanälen 7 und gegebenenfalls 6 ist insbesondere dann angebracht, wenn klimatisierte oder zumindest temperierte Luft verwendet werden soll, die Lufteinbringung in die Kanäle 7 und gegebenenfalls die Kanäle 6 über ein Temperier- oder Klimagerät 20 erfolgt, das über Leitungen 13 auf die Kanäle 7 und gegebenenfalls die Kanäle 6 wirkt. Ersichtlich wird die optimale Lösung darin gesehen, die Frischluftversorgung des Containers über die Luftführungskanäle 7 der aus Festigkeitsgründen erfindungsgemäß ausgestalteten Bodenplatte zu bewirken und die Frischluft aus den Kanälen 7 durch die Öffnungen 8 in die Kanäle 6 und von dort in den eigentlichen Container gelangen zu lassen. Die Frischlufteinbringung allein mittels der Kanäle 6 zu bewirken ist einfacher aber weniger effizient, weil die Kanäle 6 auf ihrer gesamten Länge nach oben offen sind, eine Steuerung der Lufteinbringung in den eigentlichen Container über dessen gesamte Länge nicht oder nicht ohne weiteres möglich ist. Die Lufteinbringung mittels des Staudruckes sowohl an den Luftführungskanälen 7 als auch an den Luftführungskanälen 6 ist möglich und könnte in Einzelfällen auch Vorteile bringen, würde aber einen erheblichen Steuerungsaufwand bewirken, um zu verhindern, daß die Frischluftströme in den Kanälen 7 einerseits und den Kanälen 6 andererseits nicht gegeneinander wirken.

Voraussetzung im Fall zwangsweiser Luftzuführung ist, daß der Container im Dachbereich Luftaustrittsöffnungen aufweist, aus denen Luft aus dem Container in dem Maße abgeführt werden kann, in dem sie in der beschriebenen Weise im Bodenbereich zugeführt wird. Voraussetzung ist weiter, daß die Rechteckprofile 5 in der Längsrichtung des Containers verlaufen.

**Patentansprüche**

1. Doppelwandige Bodenplatte eines belüfteten Containers, die auf ihrer Oberseite in einer Richtung, parallel zueinander verlaufende Rippen (5) aufweist und bei der der Bereich zwischen oberer Deckplatte (1) und unterer Deckplatte (2) mit Starrschaum ausgefüllt ist, dadurch gekennzeichnet, daß die obere Deckplatte (1) ein Strangprofil ist, dessen Querschnitt die Rippen als geschlossene Hohlprofile (5) auf einem durchgehenden, auf der dem Starrschaum zugekehrten Seite glatten und ebenen Plattenteil (4) aufweist.

2. Doppelwandige Bodenplatte nach Anspruch 1, dadurch gekennzeichnet, daß die Hohlprofile Rechteckprofile (5) sind, deren Unterseiten Teile des auf der dem Starrschaum zugekehrten Seite ebenen und glatten Plattenteiles (4) sind.

3. Doppelwandige Bodenplatte nach Anspruch 2, dadurch gekennzeichnet, daß die längeren Seiten der Rechteckprofile (5) deren vertikalen Wände sind.

4. Doppelwandige Bodenplatte nach Anspruch 2 oder 3, dadurch gekennzeichnet, daß die Kanten der Rechteckprofile (5) abgerundet sind.

5. Doppelwandige Bodenplatte nach Anspruch 3, dadurch gekennzeichnet, daß die Seitenwände der Rechteckprofile (5) parallel zueinander verlaufen.

6. Doppelwandige Bodenplatte nach Anspruch 3, dadurch gekennzeichnet, daß die Seitenwände der Hohlprofile (5) schräg zueinander geneigt sind.

7. Doppelwandige Bodenplatte nach Anspruch 1, dadurch gekennzeichnet, daß der Strangprofilquerschnitt unterschiedliche Wandstärken zeigt derart, daß die Seitenwände (9) der Rechteckprofile (5) die geringste Dicke haben gefolgt von - in der angegebenen Reihenfolge - den Plattenbereichen (11) in den Bereichen der Rechteckprofile zwischen deren Seitenwänden, den Plattenbereichen (12) zwischen den Rechteckprofilen und den Oberseiten (10) der Rechteckprofile.

8. Doppelwandige Bodenplatte nach Anspruch 1, dadurch gekennzeichnet, daß die Seitenwände (9) der Rechteckprofile (5) Luftverbindungsöffnungen (8) zwischen den Kanälen (7) innerhalb der Rechteckprofile und den Kanälen (6) zwischen den Rechteckprofilen aufweisen.

9. Doppelwandige Bodenplatte nach Anspruch 8, dadurch gekennzeichnet, daß die Querschnitte der Kanäle (7) innerhalb der Rechteckprofile (5) und der Kanäle (6) zwischen den Rechteckprofilen gleich oder zumindest etwa gleich sind.

10. Doppelwandige Bodenplatte nach Anspruch 8, dadurch gekennzeichnet, daß die Kanäle (7) innerhalb der Rechteckprofile (5) und/oder die Kanäle (6) zwischen den Rechteckprofilen am einen Ende mit Bereichen erhöhten Luftdruckes in Verbindung stehen, am anderen Ende geschlossen sind.

11. Doppelwandige Bodenplatte nach Anspruch 10, dadurch gekennzeichnet, daß der erhöhte Luftdruck

EP 0 325 250 B1

durch ein Temperier- oder Klimagerät (10) bewirkt wird.

12. Doppelwandige Bodenplatte nach einem der Ansprüche 1 bis 11, dadurch gekennzeichnet, daß die Längsrichtung der Rechteckprofile bzw. Hohlprofile (5) die Längsrichtung des Containers ist, der die Form eines liegenden Quaders hat.

13. Doppelwandige Bodenplatte nach einem der Ansprüche 1 bis 12, dadurch gekennzeichnet, daß die beiden Enden der Rechteck- bzw. Hohlprofile (5) wechselweise zu schließen und zu öffnen sind.

## Claims

1. A double-walled end panel of a ventilated container, the panel having top ribs (5) which extend parallel to one another in a single direction, the zone between the top covering panel (1) and the bottom covering panel (2) being filled with solid foam, characterised in that the top covering panel (1) is an extruded section whose cross-section has the ribs as closed hollow sections (5) on a continuous panel part (4) which is smooth and plane on the side near the solid foam.

2. A panel according to claim 1, characterised in that the hollow sections are rectangular sections (5) whose undersides are parts of the panel part (4).

3. A panel according to claim 2, characterised in that the long sides of the rectangular sections (5) are the vertical walls thereof.

4. A panel according to claim 2 or 3, characterised in that the edges of the rectangular sections (5) are rounded.

5. A panel according to claim 3 characterised in that the side walls of the rectangular sections (5) extend parallel to one another.

6. A panel according to claim 3, characterised in that the side walls of the hollow sections (5) are inclined relatively to one another.

7. A panel according to claim 1, characterised in that the cross-section of the extruded section has different well thicknesses such that the side walls (9) of the rectangular sections (5) have the least thickness followed, in the order specified, by the panel zones (11) in those zones of the rectangular sections which are between the side walls thereof, by the panel zones (12) between the rectangular sections (5) and by the tops (10) thereof.

8. A panel according to claim 1, characterised in that the side walls (9) of the rectangular sections (5) are formed with air passages (8) between the channels (7) in the rectangular sections (5) and the channels (6) therebetween.

9. A panel according to claim 8, characterised in that the cross-sections of the channels (9) in the rectangular sections (5) and the cross-sections of the channels (6) between the rectangular sections (5) are equal or at least substantially equal to one another.

10. A panel according to claim 8, characterised in that the channels (7) in the rectangular sections (5) and/or the channels (6) therebetween communicate at one end with zones of increased air pressure and are closed at the other end.

11. A panel according to claim 10, characterised in that the increased air pressure is produced by a temperature-control or climatising apparatus (10).

12. A panel according to any of claims 1 to 11, characterised in that the longitudinal direction of the rectangular sections or hollow sections (5) is the longitudinal direction of the container which is in the form of a horizontal parallelepiped.

13. A panel according to any of claims 1 to 12, characterised in that both ends of the rectangular or hollow sections (5) are adapted to be closed and opened alternately.

## Revendications

1. Plaque de fond à double paroi d'un conteneur ventilé qui présente sur son côté supérieur des nervures (5) s'étendant en une direction, parallèlement les unes aux autres et dans laquelle la zone comprise entre la plaque de recouvrement supérieure (1) et la plaque de recouvrement inférieure (2) est remplie de mousse durcissante, caractérisée en ce que la plaque de recouvrement supérieure (1) est un profilé extrudé dont la section transversale présente les nervures en tant que profilés creux (5) fermés sur une pièce de plaque (4) continue, lisse et plane sur les côtés adjacents à la mousse durcissante.

2. Plaque de fond à double paroi selon la revendication 1, caractérisée en ce que les profilés creux sont des profilés rectangulaires (5) dont les côtés inférieurs sont des parties de la pièce de plaque (4) plane et lisse sur les côtés adjacents à la mousse durcissante.

5

3. Plaque de fond à double paroi selon la revendication 2, caractérisée en ce que les côtés les plus longs des profilés rectangulaires (5) sont leurs parois verticales.

4. Plaque de fond à double paroi selon la revendication 2 ou 3, caractérisée en ce que les bords des profilés rectangulaires (5) sont arrondis.

5. Plaque de fond à double paroi selon la revendication 3, caractérisée en ce que les parois latérales des profilés rectangulaires (5) sont parallèles les unes aux autres.

6. Plaque de fond à double paroi selon la revendication 3, caractérisée en ce que les parois latérales des profilés creux (5) sont disposées obliquement les unes par rapport aux autres.

7. Plaque de fond à double paroi selon la revendication 1, caractérisée en ce que la section de profilé extrudé présente différentes épaisseurs de paroi de sorte que les parois latérales (9) des profilés rectangulaires (5) ont la plus faible épaisseur suivies par - dans l'ordre indiqué - les zones de plaque (11) dans les zones des profilés rectangulaires entre leurs parois latérales, les zones de plaque (12) entre les profilés rectangulaires et les côtés supérieurs (10) des profilés rectangulaires.

8. Plaque de fond à double paroi selon la revendication 1, caractérisée en ce que les parois latérales (9) des profilés rectangulaires (5) présentent des ouvertures de raccord d'aération (8) entre les canaux (7) à l'intérieur des profilés rectangulaires et les canaux (6) entre les profilés rectangulaires.

9. Plaque de fond à double paroi selon la revendication 8, caractérisée en ce que les sections transversales des canaux (7), à l'intérieur des profilés rectangulaires (5) et des canaux (6) entre les profilés rectangles, sont égales ou moins sensiblement égales.

10. Plaque de fond à double paroi selon la revendication 8, caractérisée en ce que les canaux (7) à l'intérieur des profilés rectangulaires (5) et/ou les canaux (6) entre les profilés rectangulaires sont en liaison à une extrémité avec des zones de pression d'air élevée, et sont fermés à l'autre extrémité.

11. Plaque de fond à double paroi selon la revendication 10, caractérisée en ce que la pression d'air élevée est réalisée par un appareil d'équilibrage de température ou de climatisation (10).

12. Plaque de fond à double paroi selon les revendications 1 à 11, caractérisée en ce que la direction longitudinale des profilés rectangulaires ou des profilés creux (5) est la direction longitudinale du container qui a la forme d'un parallélépipède couché.

13. Plaque de fond à double paroi selon les revendications 1 à 12, caractérisée en ce que les deux extrémités des profilés rectangulaires ou creux (5) doivent être alternativement fermées ou ouvertes.